# EUROPÄISCHE PATENTANMELDUNG

(11) **EP 1 816 450 A2**
(43) Veröffentlichungstag der Anmeldung: **08.08.2007**
(21) Anmeldenummer: 07001664.7
(22) Anmeldetag: 26.01.2007
(51) Int. Cl.: G01G 21/23

(54) **Vorrichtung zur Bestimmung einer Dachlast**

(30) Priorität: 07.02.2006 DE 102006005757
(71) Anmelder: Freudlsperger Beton- und Kieswerke GmbH, 84524 Neuötting (DE)
(72) Erfinder: Anglhuber, Hubert, 84543 Winhöring (DE)
(74) Vertreter: Kloiber, Thomas

(57) **Zusammenfassung**

Die vorliegende Erfindung betrifft eine Vorrichtung zur Bestimmung einer Dachlast, die, um zuverlässig und ohne großen technischen und personellen Aufwand kontinuierlich arbeitet, aus wenigstens einer, vorzugsweise drei, Wägezellen (1) und einem Wägegehäuse (2) besteht, wobei die Vorrichtung Mittel zur Befestigung auf einem Dach aufweist.

## Beschreibung

Die vorliegende Erfindung betrifft eine Vorrichtung zur Bestimmung einer Dachlast.

Horizontale Dächer, Dächer mit einem Neigungsgrad oder einer großen Fläche wie beispielsweise solche von Lagerhallen, Fabrikationsgebäuden oder Messe- und Sporthallen sind mit der winterlichen Schneelast besonderen Belastungen ausgesetzt. In den Wintermonaten können zusätzlich zu dem Eigengewicht des Daches bis zu 200 kg Schnee pro Quadratmeter Dachfläche auf der Tragkonstruktion des Daches lasten. Es ist daher für Bauherren oder Betreiber derartiger Gebäude aus Sicherheitsaspekten von größter Bedeutung, die aktuelle Dachlast zuverlässig und ohne großen technischen und personellen Aufwand bestimmen zu können, um so rechtzeitig bei Erreichen oder Überschreiten der rechnerischen Dachlast die erforderlichen Maßnahmen ergreifen zu können.

Zur Bestimmung von Lasten sind eine ganze Reihe von Verfahren bekannt. Aus der Industrie sind Wägemodule und Präzisionsmesszellen zur Bestimmung von Behälter-, Tank- oder Containergewichten bekannt, in denen Flüssigkeiten, Pulver, Feststoffe und Gase erfasst, gelagert und verarbeitet werden. Solche Wägemodule bieten Wägekapazitäten von wenigen hundert Kilogramm bis hin zu mehreren Tonnen und sind üblicherweise in oder unter einem oder mehreren der Standbeine der Behälter angeordnet. Auch sind Boden-, Paletten und Flachbettwaagen aus industriellen Anwendungen bekannt, die in Trocken- und Nassbereichen, aber auch in explosionsgefährdeten Bereichen zur Wägung von ortsbeweglichen Gewichten wie Lkw, Stapler, Paletten etc. eingesetzt werden.

Aus der Meteorologie sind wiederum Niederschlagswaagen bekannt, die feuchte und trockene Niederschläge gravimetrisch bestimmen, wozu der Schnee thermisch in flüssiges Wasser umgewandelt wird. Derartige Niederschlagswaagen sind auf höchste Genauigkeit ausgelegt und weisen aerodynamisch angepasste Sammelbehältnisse auf, um keine ungünstigen, zur Trennung von Luftstrom und Schneefracht führenden Strömungsverhältnisse zu erzeugen. Sie haben üblicherweise Sammeltrichter oder Zylinder mit relativ kleinen Grundflächen. Weiterhin sind aus dem meteorologischen Sektor Balkenwaagen mit angehängten Sammelzylindem bekannt.

Zur Bestimmung der Schneemenge ist weiterhin bekannt, ein definiertes Schneevolumen auszustechen, das ausgestochene Volumen von der Schneefläche zu verbringen und aufzutauen und sodann das Gewicht des gewonnenen Wassers zu bestimmen. Derartige Meßmethoden sind jedoch arbeitsaufwendig und wenig praktikabel für kontinuierliche Dachlastbestimmungen.

Es ist daher Aufgabe der vorliegenden Erfindung, eine Vorrichtung zur Bestimmung einer Dachlast anzugeben, die zuverlässig und ohne großen technischen und personellen Aufwand kontinuierlich arbeitet.

Diese Aufgabe wird dadurch gelöst, dass sie aus wenigstens einer, vorzugsweise drei, Wägezellen und einem Wägegehäuse besteht, wobei die Vorrichtung Mittel zur Befestigung auf einem Dach aufweist. Diese erfinderische Maßnahme erlaubt mit großem Vorteil, an sich bekannte und erprobte robuste Wägezellen mit einem für den neuen Einsatzzweck der Bestimmung einer Dachlast, wie beispielsweise Schnee, entworfenen Wägegehäuse auf einem zu überwachenden Dach mithilfe der Befestigungsmittel anzubringen, wobei wenigstens Teile des Wägegehäuses einen Teil des Wägemechanismus bilden. Durch die Verwendung von drei Wägezellen lässt sich eine exakt horizontale Wägeebene definieren und einhalten. Dies ermöglicht die exakte Bestimmung der Dachlast.

In Weiterbildung der Erfindung ist vorgesehen, dass das Wägegehäuse wenigstens aus einem Sockel und einer Wägeplatte, vorzugsweise aus einem Sockel, einer Wägeplatte und einem zwischen diesen angeordnetem Randelement, besteht und die wenigstens eine Wägezelle umschließt. Auf diese Weise sorgt das Wägegehäuse für einen Schutz der Wägezellen vor Umwelteinflüssen, da diese nicht direkt auf die Wägezellen einwirken können. Neben der Schutzfunktion hat das Wägegehäuse in Form seiner Wägeplatte auch Anteil an den messenden Bauteilen der erfindungsgemäßen Vorrichtung, die durch Wägezelle(n) und Wägeplatte gebildet sind, denn das Wägegut kommt auf der Wägeplatte zu liegen. Der Sockel des Wägegehäuses ist so ausgestaltet, dass er auf einem Dach der eingangs genannten Art befestigbar ist, was beispielsweise mittels dafür vorgesehener Bohrungen und Quetschdichtungen erfolgen kann, so dass die Dachhaut nicht verletzt wird. Hierzu ist erfindungsgemäß auch vorgesehen, den Sockel über Winkel oder Befestigungsklemmen zu befestigen, wie sie aus der Aufständerung von Photovoltaik-Panels auf Flachdächern bekannt sind. Der Sockel stellt die Verbindung des Wägegehäuses mit dem Dach her, er dient somit als tragende Basis für die weiteren Bauteile der erfindungsgemäßen Vorrichtung. Er kann dabei erfindungsgemäß als durchgängige oder durchbrochene Platte in Form eines Rechtecks, eines Quadrats, eines Dreiecks, eines Kreises oder als überwiegend ringförmige Kreisscheibe oder als miteinander verbundene Streifen sowie auf jede andere, dem Fachmann bekannte Art ausgebildet sein, solange er die Funktion erfüllt, das Wägegehäuse sicher mit dem Dach zu verbinden. Ein nachträglicher Einbau der Vorrichtung auf bestehenden Dächern ist über den Sockel fast immer möglich. Ein erfindungsgemäß vorgesehenes Randelement bildet vorteilhafterweise eine Verbindung zwischen Sockel und Wägeplatte und schließt die Vorrichtung seitlich gegen Witterungseinflüsse ab. Hierbei kann das Randelement aus mehreren Bauteilen bestehen.

Besonders vorteilhaft ist, dass die erfindungsgemäße Vorrichtung eine dreieckige Grundform aufweist. Die im Grundriss dreieckförmige Ausgestaltung hat den Vorteil, dass die Vorrichtung bei geneigten Dächern mit einer Spitze in Richtung Dachfirst montierbar ist. Die in Richtung Dachfirst zeigende Spitze des Dreiecks bildet einen zuverlässigen Schutz der Vorrichtung vor Schneelawinen. Diese werden durch die Spitze zerteilt und an den Wänden des Wägegehäuses schadlos seitlich abgeleitet.

In Ausgestaltung der Erfindung ist vorgesehen, dass die Wägeplatte wärmeentkoppelt vom restlichen Wägegehäuse ausgebildet ist. Die Wärmeentkopplung der Wägeplatte wird beispielsweise mittels Induktionsschleffen erreicht. Sie verhindert mit großem Vorteil ein Festfrieren oder Zuwehen der Wägeplatte und vermeidet somit eine Falschwägungen.

Weist das Wägegehäuse Öffnungen auf, insbesondere Entwässerungsöffnungen, so wird anfallendes Kondens- oder Schmelzwasser sicher aus der Vorrichtung entfernt und Korrosionserscheinungen oder ein Festfrieren von Bauteilen werden verhindert.

Als Weiterbildung der Erfindung ist mit großem Vorteil vorgesehen, dass die Wägezellen zum Sockel beabstandet angeordnet sind, insbesondere mittels eine horizontale Ebene definierenden Abstandshaltern. Durch die Beabstandung werden die Wägezellen vor Kondenswasser geschützt, das sich vor allem in Nähe der Dachhaut ansammelt. Weiterhin dienen die Abstandshalter bei geneigten Dächern dazu, eine horizontale Wägeebene zu definieren, also die Neigung auszugleichen. Der Lastabtrag auf die Wägezellen erfolgt somit immer senkrecht von oben nach unten, was die Zuverlässigkeit der Vorrichtung erhöht.

Tragen die wenigstens eine Wägezelle die Wägeplatte, so wird unter Vermeidung weiterer Bauteile eine einfache und direkte Kraftübertragung von der Wägeplatte auf die Wägezellen erreicht. Durch die Dreipunktlagerung der Wägeplatte auf den vorzugsweise drei Wägezellen ist eine definierte Messung möglich.

Mit Vorteil ist vorgesehen, dass die Vorrichtung eine Anzeigeeinheit, gegebenenfalls mit Wamvorrichtung, aufweist Diese Anzeigeeinheit wird in einer für den Bauherrn zugänglichen Räumlichkeit angeordnet und dient zur Anzeige des auf der Waage liegenden Schneegewichts. Die Anzeigeeinheit kann eine digitale oder analoge Anzeige beinhalten sowie eine Warnvorrichtung, die automatisch bei Erreichen eines vordefinierten Wertes, wie beispielsweise der rechnerischen Dachlast, optischen oder akustischen Alarm auslöst. Dies kann erfindungsgemäß auch in einer räumlich entfernten Überwachungsstation erfolgen, beispielseweise durch Funkübertragung der aktuellen Meßwerte.

Besteht die Vorrichtung zumindest teilweise aus korrosionsbeständigem Material, vorzugsweise Aluminium, Edelstahl, feuerverzinktem Stahl, Plexiglas oder Kunststoff oder einer Kombination der genannten Materialien, so wird mit großem Vorteil eine lange Standzeit bei geringster Wartungsanfälligkeit der Vorrichtung erreicht.

Es ist erfindungsgemäß vorgesehen, an sich bekannte und erprobte Wägezellen für eine Vorrichtung gemäß einem der vorherigen Ansprüche zu verwenden. Auf diese Weise wird mit Vorteil die Entwicklung einer neuen Wägezelle vermieden.

Die Erfindung wird im weiteren in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
Fig. 1 eine erste Ausführungsform der Erfindung im Querschnitt,
Fig. 2 eine erste Ausführungsform der Erfindung in der Aufsicht und
Fig. 3 eine zweite Ausführungsform der Erfindung im Querschnitt.

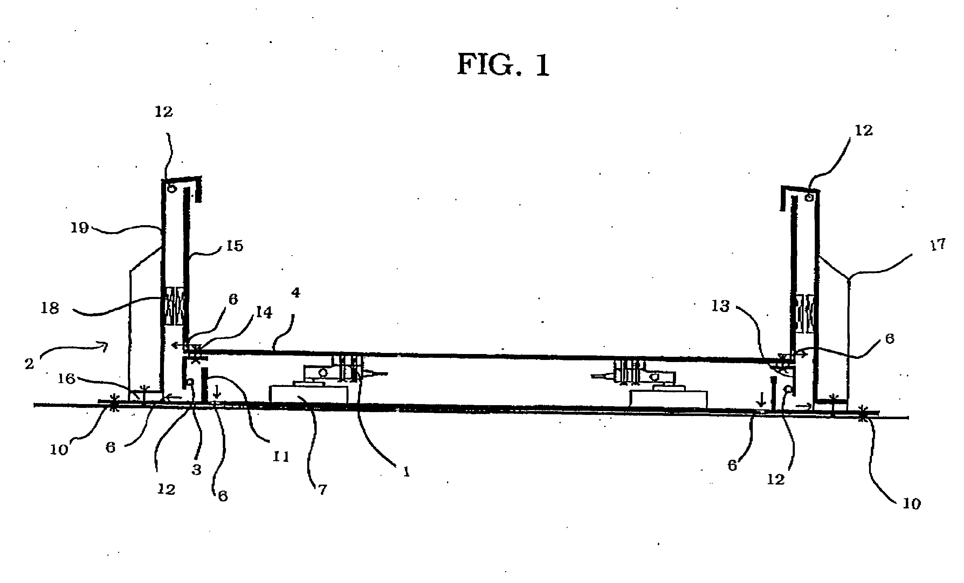

Fig. 1 zeigt eine erste Ausführungsform der Erfindung im Querschnitt. Auf einem nicht dargestellten Dach der eingangs genannten Art befindet sich der Sockel 3, der hier wie die gesamte Vorrichtung mit Ausnahme der Abstandshalter als Metallplatte ausgebildet ist. Der Sockel 3 ist über Quetschdichtungen 10 mit einem Dach verbunden, Kondenswasser zwischen Vorrichtung und Dach kann daher ungestört abfließen, es bildet sich keine Staunässe. Der Sockel 3 weist weiterhin Öffnungen 6 auf, durch die Schmelz- oder Kondenswasser aus der Vorrichtung auf das Dach abläuft. Der Sockel 3 weist in dieser Ausführungsform einen Rand 11 auf, der durch aufgeschweisste stehende Bleche gebildet wird. Die so gebildete Wanne dient dazu, Witterungseinflüsse von den Wägezellen 1 abzuhalten. Der Sockel 3 trägt Abstandshalter 7, auf denen die Wägezellen 1 angeordnet sind. Die Wägezellen 1 sind an sich bekannt, sie haben ein zulässiges Wägegewicht von 10 bis 200 kg bei einer Genauigkeit von 3 kg pro Wägezelle. Auf den Wägezellen 1 ruht die Wägeplatte 4, die als Riffelblech ausgebildet ist. Aufgrund der rauen Oberfläche des Riffelbleches bleibt Schnee leicht auf der Wägeplatte 4 liegen. Die Wägeplatte 4 weist eine definierte Fläche von beispielsweise 1 m² auf und ist seitlich durch Randbleche 15 begrenzt, die Öffnungen 6 im Bereich nahe der Wägeplatte 4 aufweisen. Diese Öffnungen 6 dienen zum Abfließen von Schmelzwasser von der Wägeplatte4. Durch die Wägeplatte 4 und die Randbleche 15 wird eine Wanne definiert, deren Tiefe an die zu erwartende Schneelast angepasst zu wählen ist, beispielsweise 50 cm. Unterhalb der Wägeplatte 4 sind per Induktionsschleife 12 wärmeentkoppelte Abtropfbleche 13 angeordnet, wobei die Abtropfbleche 13 an der Wägeplatte 4 über Elastomerlager 14 befestigt sind. Auf diese Weise wird eine Art umlaufende Schürze gebildet, die ebenfalls Witterungseinflüsse von den Wägezellen 1 abhält. An diesem Abtropfblech 13 tropft von der Wägeplatte 4 durch Öffnungen 6 ablaufendes Schmelzwasser ab und fällt auf den Sockel 3 außerhalb des Randes 11. Die Wägezellen 1 sind daher durch den Sockel 3, den Rand 11, das Abtropfblech 14 und die Wägeplatte 4 vor Witterungseinflüssen geschützt. Der Sockel 3 trägt weiterhin ein Randelement 5. In dieser Ausführungsform ist das Randelement 5 als Einblechung 19, Aussteifungsblech 17, Abtropfblech 13 und Rand 11 ausgebildet. Die Einblechung 19 wird auf den Sockel über Distanzbleche 16 geschraubt, wodurch sich horizontale Entwässerungskanäle ergeben, die Schmelz-oder Regenwasser aus dem Sockel 3 auf die Dachhaut leiten. Für den Fall von Wartungsarbeiten kann die Einblechung 19 als Einheit problemlos abgeschraubt werden, ohne die Verankerung des Sockels 3 lösen zu müssen. Die Einblechung 19 überragt die Wägeplatte 4 mit Randblech 15, so dass diese vor Witterungseinflüssen geschützt sind. Im oberen Bereich ist die Einblechung 19 u-förmig über den oberen Rand des Randblechs 15 gebogen. Hierdurch wird ein Eindringen von Schnee in den Bereich zwischen Wägeplatte 4 und Sockel 3 zuverlässig verhindert. Der Biegebereich der Einblechung 19 ist nach außen geneigt und weist eine Induktionsschleife 12 auf, die die Vorrichtung bei Verwehungen, harscher Schneedecke von oben schnee- und eisfrei hält. Die Einblechung 19 wird wie in Fig. 1 dargestellt, gegebenenfalls mittels eines eingeschweißten Aussteifungsbleches 17 verstärkt. Zwischen Einblechung 19 und Randblech 15 ist erfindungsgemäß ein Teflonlager 18 vorgesehen. Dieses Teflonlager 18 stellt die Betriebsfähigkeit der Vorrichtung sicher, falls die Wägeplatte 4 mit Randblech 15 aus Lagerungsgrunden nicht seitlich unverschieblich auf den Wägezellen 1 und Abstandshaltern 7 ruhen kann, da selbst bei Kontakt kaum Reibung zwischen den Teflonlagern 18 entsteht. Das Messergebnis wird praktisch nicht beeinflusst.

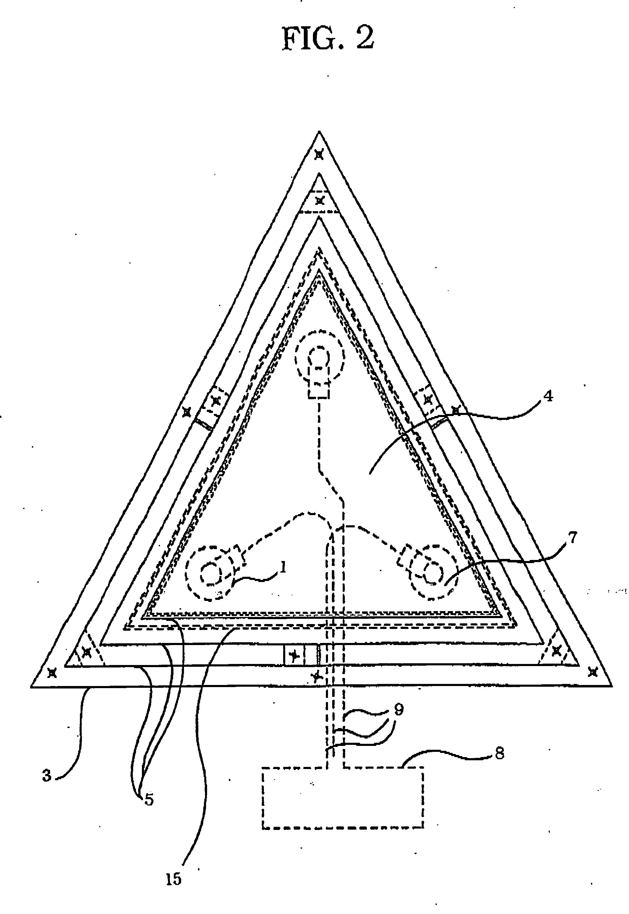

Fig. 2 zeigt eine Aufsicht auf die erste Ausführungsform, bei der gleiche Bauteile mit gleichen Bezugszeichen versehen wurden. Die auf Abstandshaltern 7 ruhenden Wägezellen 1 sind über Wirkverbindungen 9 mit einer Anzeigeeinheit 8 verbunden, die sich in einem zugänglichen Raum im Inneren des zu überwachenden Gebäudes oder einer räumlich entfernten Überwachungsstation befindet. Die Anzeigeeinheit 8 gibt die momentane Schneelast pro m² Dachfläche wieder und kann eine Warnvorrichtung enthalten, die beispielsweise optische oder akustische Signale gibt. Sie kann weiterhin eine Funktionsanzeige der Induktionsschleifen 12 enthalten, damit deren Ausfall bemerkt und behoben werden kann. Fig. 2 ist die dreieckige Grundform der erfindungsgemäßen Vorrichtung zu entnehmen.

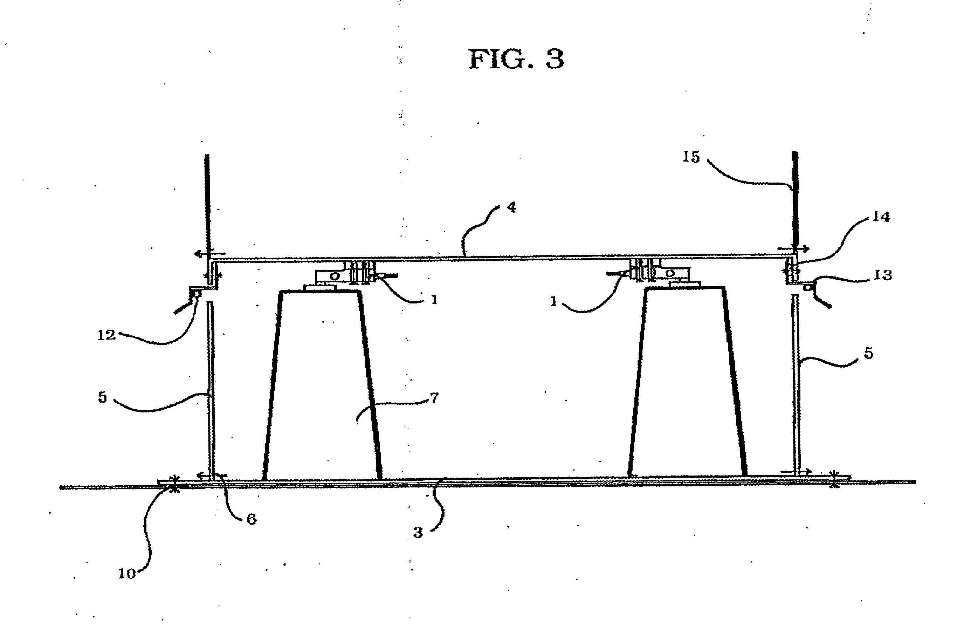

Fig. 3 zeigt einen Querschnitt durch eine zweite Ausführungsform der Erfindung mit vereinfachtem Aufbau. Sockel 3 und dessen Befestigung auf dem Dach entspricht der Ausführungsform 1. Der Unterschied zur ersten Ausführungsform liegt vor allem in der Ausgestaltung des Randelements 5, dass hier als einfaches, auf dem Sockel 3 befestigtes Blech mit Öffnungen 6 ausgebildet ist. Ein Eindringen von Schnee oder Regen in den Spalt zwischen Blech und Wägeplatte 4 wird durch ein Abtropfblech 13 verhindert, das wärmeentkoppelt an der Wägeplatte 4 über ein Elastomerlager 14 befestigt ist. Hierbei ist die Wägeplatte 4 in ihrem Randbereich nach unten abgewinkelt, um einen Befestigungsschenkel für das Abtropfblech 13 zu bilden. Es ist auch denkbar, anstelle eines abgewinkelten Schenkels einen an das Abtropfblech 13 angeformten Winkel als Befestigungsmittel zu verwenden und diesen direkt mit der Wägeplatte 4 zu verbinden. Das Abtropfblech 13 dieser Ausführungsform trägt eine Induktionsschleife 12 zur Verhinderung von Vereisung. Es ist dabei ausreichend, die Temperatur des Abtropfbleches 13 auf etwa 5°C bis 10°C zu halten. Das Abtropfblech 13 reicht über den oberen Rand des Bleches hinaus nach unten, so dass die Öffnung zwischen Blech und Wägeplatte 4 seitlich abgeschlossen ist. Das Abtropfblech 13 kann hierfür eine Schürze aus dünnem Blech oder Gummi tragen. Die Wägeplatte 4 kann gegebenenfalls Randbleche 15 tragen, in diesem Fall entspräche der Aufbau dem der ersten Ausführungsform. Auch in dieser Ausführungsform sind die an sich bekannten Wägezellen 1 mit der oben genannten Charakteristik auf Abstandshaltern 7 gelagert und tragen ihrerseits die als Riffelblech ausgebildete Wägeplatte 4. Diese zweite Ausführungsform ist ebenfalls in der Grundfläche dreieckig ausgebildet und entspricht damit der in Fig. 2 dargestellten Ausführungsform.

### BEZUGSZEICHENLISTE

- 1: Wägezelle
- 2: Wägegehäuse
- 3: Sockel/Grundplatte
- 4: Wägeplatte
- 5: Randelement
- 6: Öffnung
- 7: Abstandshalter
- 8: Anzeigeeinheit
- 9: Wirkverbindung
- 10: Quetschdichtung
- 11: Rand
- 12: Induktionsschleife
- 13: Abtropfblech
- 14: Elastomerlager
- 15: Randblech
- 16: Distanzblech
- 17: Aussteifungsblech
- 18: Teflonlager
- 19: Einblechung

## Patentansprüche

1. Vorrichtung zur Bestimmung einer Dachlast, **dadurch gekennzeichnet , dass** sie aus wenigstens einer, vorzugsweise drei, Wägezellen (1) und einem Wägegehäuse (2) besteht, wobei die Vorrichtung Mittel zur Befestigung auf einem Dach aufweist.

2. Vorrichtung gemäß Anspruch 1, **dadurch gekennzeichnet , dass** das Wägegehäuse (2) wenigstens aus einem Sockel (3) und einer Wägeplatte (4), vorzugsweise aus einem Sockel (3), einer Wägeplatte (4) und einem zwischen diesen angeordnetem Randelement (5), besteht und die wenigstens eine Wägezelle (1) umschließt.

3. Vorrichtung gemäß Anspruch 1 oder 2, **dadurch gekennzeichnet , dass** sie eine dreieckige Grundform aufweist.

4. Vorrichtung gemäß einem der Ansprüche 1, 2 oder 3, **dadurch gekennzeichnet , dass** die Wägeplatte (4) wärmeentkoppelt vom restlichen Wägegehäuse (2) ausgebildet ist.

5. Vorrichtung nach einem der vorhergehenden Ansprüche, **dadurch gekennzeichnet, dass** das Wägegehäuse (2) Öffnungen (6) aufweist, insbesondere Entwässerungsöffnungen.

6. Vorrichtung nach einem der vorhergehenden Ansprüche, **dadurch gekennzeichnet, dass** die Wägezellen (1) zum Sockel (3) beabstandet angeordnet sind, insbesondere mittels eine horizontale Ebene definierenden Abstandshaltern (7).

7. Vorrichtung nach einem der vorhergehenden Ansprüche, **dadurch gekennzeichnet, dass** die wenigstens eine Wägezelle (1) die Wägeplatte (4) tragend ausgebildet ist.

8. Vorrichtung nach einem der vorhergehenden Ansprüche, **dadurch gekennzeichnet, dass** sie eine Anzeigeeinheit (8), gegebenenfalls mit Warnvorrichtung, aufweist.

9. Vorrichtung nach einem der vorhergehenden Ansprüche, **dadurch gekennzeichnet, dass** sie zumindest teilweise aus korrosionsbeständigem Material besteht, vorzugsweise aus Aluminium, Edelstahl, feuerverzinktem Stahl, Plexiglas oder UVbeständigem Kunststoff oder einer Kombination der genannten Materialien.

10. Verwendung von an sich bekannten Wägezellen für eine Vorrichtung gemäß einem der vorherigen Ansprüche.
